# EUROPÄISCHE PATENTSCHRIFT

(11) **EP 1 916 070 B1**
(45) Veröffentlichungstag und Bekanntmachung des Hinweises auf die Patenterteilung: **26.01.2011**
(21) Anmeldenummer: 07020261.9
(22) Anmeldetag: 17.10.2007
(51) Int. Cl.: B25J 5/00, B62D 55/075

(54) **Steuerbarer mobiler Landroboter**
Controllable mobile ground robot
Robot controlé mobile sur terre

(30) Priorität: 28.10.2006 DE 102006050941
(43) Veröffentlichungstag der Anmeldung: 30.04.2008
(73) Patentinhaber: Diehl BGT Defence GmbH & Co.KG, 88662 Überlingen (DE)
(72) Erfinder: Kopfstedt, Thomas, 88662 Überlingen (DE); Mauder, Markus, 97638 Mellrichstadt (DE)
(74) Vertreter: Diehl Patentabteilung

(56) Entgegenhaltungen:
- FR-A- 2 610 885
- JP-A- 59 114 171
- JP-A- 60 185 677
- JP-A- 61 160 366
- US-A- 5 046 914
- P.S.SCHENKER ET AL: "Reconfigurable robots for all terrain exploration" PROC. SPIE INT. SOC. OPT. ENG, SENSOR FUSION AND DECENTRALIZED CONTROL IN ROBOTIC SYSTEMS III, Bd. 4196, 2000, Seiten 454-468, XP002463942 Boston, MA

## Beschreibung

Die Erfindung betrifft einen steuerbaren Landroboter mit einer Antriebsplattform zur Fortbewegung und mit einem auf der Antriebsplattform angeordneten bewegbaren Manipulatorarm.

Derartige Landroboter werden beispielsweise zur Entschärfung von Sprengvorrichtungen, Minen oder sonstigen Kampfmitteln, als militärische Wegbereiter oder Aufklärer in feindlichem Kampfgebiet, zur Untersuchung kontaminierten Terrains, zur Inspektion und Analyse verdächtiger Objekte oder auch als Erkundungsfahrzeuge auf extraterrestrischem Gelände eingesetzt. Zur Fortbewegung weist ein derartiger Landroboter an der Antriebsplattform in der Regel bereifte Antriebsräder oder einen Kettenantrieb, bestehend aus Laufrädern und einer diese umlaufenden Kette, auf. Der Antrieb soll dabei insbesondere auch eine Fortbewegung des Landroboters auf unwegsamem Gelände, z. B. auf unebenem, stufigem oder steilem Untergrund, ermöglichen. Zur Abwehr der durch Sprengvorrichtungen, Minen oder sonstigen Kampfmitteln verursachten Gefahren sowie zur Inspektion unbekannter Objekte oder zu einer Bodenanalyse sowie bei Eindringen in feindliches Gebiet ist der Manipulatorarm in aller Regel als ein Greifarm ausgebildet, der selbsttätig die jeweils notwendigen Werkzeuge, Analysegeräte und/oder Abwehrmittel, wie Schusswaffen oder Sprengmittel aus einem mitgeführten Depot greifen und zielgerichtet einsetzen kann.

Die Fortbewegung und die Bewegung des Manipulatorarms werden üblicherweise mittels einer Funkverbindung oder einer Kabelverbindung von einem sich in sicherer Entfernung aufhaltenden Bediener gesteuert. Als Steuerhilfe kann dabei der Landroboter mit einem visuellen Überwachungssystem, insbesondere einem Bilderkennungssystem oder einer Kamera, ausgestattet sein, um dem Bediener das jeweilige Umfeld des Landroboters anzuzeigen. Für extraterrestrisch eingesetzte Landroboter werden hierzu beispielsweise Bildaufnahmen der Umgebung an den steuernden Bediener gesendet. Insbesondere der zivile Einsatz eines derartigen Landroboters gewinnt derzeit an Bedeutung, um beispielsweise verdächtige Objekte, wie Koffer oder dergleichen ohne Gefahr für das menschliche Leben genau analysieren und gegebenenfalls entschärfen zu können.

Für die Vielzahl von Einsatzmöglichkeiten und um eine hohe Tragfähigkeit zu erreichen, weisen die Manipulatorarme moderner steuerbarer Landroboter einen Gewichtsanteil von zum Teil mehr als 25% des Gesamtgewichts auf. Damit geht jedoch eine Kippgefährdung des Landroboters einher, sobald dieser auf unebenem, abfallendem oder steigendem Gelände in eine Schräglage gerät. Um diesem Problem zu begegnen, ist es bekannt, den Gesamtschwerpunkt des Landroboters mittels konstruktiver Maßnahmen ausreichend tief zu legen, damit die Kippgefahr nicht mehr auftritt. Auch ist es bekannt, den Manipulatorarm bei Erkennen einer durch das voraussichtliche Befahren einer schrägen Unterlage auftretenden Kippgefahr rechtzeitig durch den Bediener aktiv in eine die Kippgefahr vermindernde Position zu fahren. Insbesondere kann hierfür eine fest einprogrammierte Sollkonfiguration des Manipulatorarms vorgesehen sein, die der Bediener rechtzeitig auswählen muss.

Eine automatisierte, vorausschauende Bewegung des Manipulatorarms in eine die Kippgefahr vermindernde Position ist beispielsweise aus der den Oberbegriff des Anspruchs 1 bildenden wissenschaftlichen Publikation "Reconfigurable robots for all terrain exploration", Jet Propulsion Laboratory, California Institute of Technology, P.S. Schenker et al, Proc. SPIE Vol. 4196, Sensor Fusion and Decentralized Control in Robotic Systems III, Boston, MA, November 5-8, 2000, bekannt. Dort wird für einen extraterrestrisch eingesetzten Landroboter die Möglichkeit beschrieben, bei Erwartung einer instabilen Lage durch das voraussichtlich zu befahrende Gelände den Manipulatorarm zur Schwerpunktsverlagerung in eine geänderte Position zu verfahren.

Eine konstruktive Umgestaltung des Landroboters ist aufwendig, teuer und kann je nach Einsatzgebiet des Landroboters und somit zwingend vorgegebener baulicher Eigenschaften nicht immer zufriedenstellend hinsichtlich der Kippstabilität durchgeführt werden. Nachteilig bei den beschriebenen Möglichkeiten zur Vermeidung der Kippgefahr durch eine Umkonfiguration des Manipulatorarms ist, dass die Bewegung des Manipulatorarms rechtzeitig eingeleitet bzw. abgeschlossen sein muss, um bei Erreichen des schrägen oder unwegsamen Geländes den Landroboter hinsichtlich seines Schwerpunkts ausreichend stabilisiert zu haben. Ist die Fortbewegungsgeschwindigkeit des Landroboters zu hoch, die Bewegung des Manipulatorarms zu langsam, das wird eine kippgefährliche Situation zu spät erkannt, so kann ein Kippen des Landroboters nicht mehr rechtzeitig verhindert werden.

Aufgabe der Erfindung ist es, einen Landroboter anzugeben, bei dem ein Verkippen möglichst vermieden wird.

Diese Aufgabe wird erfindungsgemäß durch einen steuerbaren Landroboter gemäß Anspruch 1 gelöst.

Die Erfindung geht dabei von der Überlegung aus, dass sich das Verkippen eines herkömmlichen Landroboters nicht vermeiden lässt, wenn eine kippgefährliche Situation zu spät erkannt wird, und infolge dessen der Manipulatorarm zu spät in seine kippstabilisierende Position bewegt wird. Bei bisherigen Lösungen des Standes der Technik musste daher die Kippsituation rechtzeitig erkannt werden, um den Manipulatorarm noch vor Erreichen der voraussichtlichen Kippposition in die stabilisierende Lage bewegen zu können.

Die Erfindung geht nun in überraschender Weise einen anderen Weg, indem nicht eine voraussichtlich eintretende Kippgefahr aus dem zu befahrenden Gelände vorhergesagt wird, sondern der Landroboter mittels eines geeigneten Sensors ständig seine Lage erfasst und bei Erfassung einer eintretenden Schräglage durch eine entsprechende aktive Bewegung des Manipulatorarms selbsttätig stabilisiert wird.

Mit anderen Worten sieht die Erfindung vor, den Manipulatorarm ausgehend von der jeweils erfassten Lage des Landroboters in eine für den Gesamtschwerpunkt günstige Position zu bringen oder eine entsprechend stabilisierende Bewegung auszulösen. Während gemäß Stand der Technik bei einer zu erwartenden Kippgefahr bezüglich der voraussichtlich zu befahrenden Strecke der Manipulatorarm voraussehend in eine günstige Position gebracht wird, reagiert der Landroboter gemäß Erfindung durch Erfassung seiner Lage selbsttätig, indem der Manipulatorarm der Lage entsprechend in eine günstige Position gebracht oder durch eine Gegenbewegung unter Ausnutzung von Trägheiten und Drehmomenten der Landroboter insgesamt stabilisierend bewegt wird. Zur Steuerung des Manipulatorarms wird hierbei im Unterschied zum Stand der Technik jeweils die aktuelle Lage des Landroboters mittels des zur Lageerfassung ausgebildeten Sensors erfasst und entsprechend ausgewertet. Das Bewegen des Manipulatorarms geschieht demnach aktiv als eine Reaktion auf die gegenwärtige Lage des Landroboters während seiner Fortbewegung.

Grundsätzlich ist die Erfindung anwendbar auf jeden Landroboter, der einen bewegbaren Manipulatorarm aufweist. Eine Stabilisierung kann dabei natürlich umso besser erzielt werden, je höher das Gewicht des Manipulatorarms im Verhältnis zum Gesamtgewicht des Landroboters ist. Auch ist eine umso bessere Stabilisierung möglich, je größer der Aktionsradius des Manipulatorarms ist. Die Steuereinheit kann sowohl auf dem Landroboter als auch entfernt, z.B. am Ort des Bedieners, angeordnet sein. Im letzteren Fall ist hinsichtlich eines raschen Datenaustausches insbesondere die Übertragungsgeschwindigkeit zu beachten.

Zur Lageerfassung genügt im minimalsten Fall ein Winkelsensor, der die Schräglage des Landroboters beispielsweise gegenüber der Achse überwacht, bezüglich derer bei einer Verdrehung die höchste Kippgefahr bzw. die höchste Instabilität des Landroboters vorliegt. Da der Landroboter jedoch häufig auf schrägem oder stufigem bzw. unebenem Gelände eingesetzt sein wird, empfiehlt es sich, als Grundausstattung für den Sensor zur Erfassung der Lage einen dreidimensionalen Winkelsensor einzusetzen, der eine Verkippung des Landroboters um die drei Raumachsen erfasst.

Für eine aktive Kippstabilisierung bzw. Kippvermeidung ist eine rasche Erfassung der Lage des Landroboters hilfreich. Bei den erreichbaren Geschwindigkeiten heutiger Landroboter (bis über 10 km/Std.) empfiehlt es sich, die Lagesignale des die Lage erfassenden Sensors mit einer Frequenz von mindestens 10 s⁻¹, also 10 mal pro Sekunde oder öfter, abzutasten. Entsprechende Elektroniken zur Auswertung der erfassten Lagesignale sind hierfür ausreichend bekannt.

Um eine rasche Reaktion des Manipulatorarms im Falle einer erfassten Verkippung oder Schräglage des Landroboters zu erzielen, ist die Steuereinheit zweckmäßigerweise dafür eingerichtet, die Bewegung des Manipulatorarmes nach Erfassung der Lagesignale mit einer Reaktionszeit von weniger als 10 ms einzuleiten. Dies genügt, um während der Fortbewegung des Landroboters eine beginnende Schräglage durch eine entsprechende Gegenbewegung des Manipulatorarms zu stabilisieren. Je nach Fortbewegungsgeschwindigkeit des Landroboters wird es notwendig, die Drehgeschwindigkeit des Manipulatorarms anzupassen, um eine aktive Kippvermeidung mit hinreichend hohem Erfolg zu erzielen. Insbesondere bei Geschwindigkeiten des Landroboters von mehr als 10 km/Std. ist zweckdienlicherweise ein Manipulatorarm vorzusehen, der wenigstens ein Drehgelenk mit einem Antrieb derart aufweist, dass Drehbewegungen mit einer Winkelgeschwindigkeit von mehr als 50° pro Sekunde, vorzugsweise von mehr als 90° pro Sekunde ermöglicht sind. Auf diese Weise wird innerhalb einer möglichst kurzen Reaktionszeit der Manipulatorarm zu einer Stabilisierung einer Schräglage des Landroboters verschwenkt, wodurch der Gesamtschwerpunkt rasch genug verändert wird, um ein Umkippen insgesamt zu verhindern. Derartige Manipulatorarme mit entsprechend ausgestalteten Antrieben sind heute bereits verfügbar.

In dem erfindungsgemäßen Landroboters ist der Manipulatorarm mit Positionssensoren zur Erfassung der jeweils aktuellen Position ausgestattet, wobei die Steuereinheit dafür eingerichtet ist, ausgehend von den Positionssignalen des Manipulatorarms modell basiert die Lage des Systemschwerpunkts zu ermitteln. Üblicherweise sind Manipulatorarme aus der Robotik mit Positionssensoren ausgestattet, die - ausgehend beispielsweise von den Drehbewegungen des jeweiligen Antriebs - der sie ansteuernden Steuereinheit zu jeder Zeit die genaue Position und Lage des Armes übermitteln. Solche Sensoren können beispielsweise Hall-Sensoren sein, die direkt auf den Antriebswellen des ein Gelenk antreibenden Antriebes angebracht sind. Auch können Winkel-oder Abstandssensoren eingesetzt sein. Es ist auch möglich, bei Translationsbewegungen Verschiebungsdetektoren, wie beispielsweise Dehnmessstreifen mit veränderlichem Widerstand oder dergleichen einzusetzen. Aufgrund der Daten, die von derartigen Positionssensoren der Steuereinheit übermittelt werden, verfügt diese zu jedem Zeitpunkt über eine Kenntnis der genauen Position des Manipulatorarms.

Da die Antriebsplattform des Antriebsroboters einschließlich seiner Antriebsorgane, wie Räder oder Ketten im Wesentlichen mechanisch stabil sind und insofern keinen Einfluss auf den Systemschwerpunkt oder Gesamtschwerpunkt des Landroboters haben, ist die Steuereinheit in der Lage, aus der aktuellen Position des Manipulatorarms auf die Lage des Systemschwerpunkts zurückzuschließen. Dies wird insbesondere durch die Vorgabe eines den Landroboter nachbildenden Modells bewirkt, welches in der Steuereinheit implementiert ist. Dabei kann beispielsweise jeder Position des Manipulatorarms in einer Art Tabelle die Lage eines Systemschwerpunkts zugeordnet sein. Die diesbezüglichen Daten können hierzu aus einem realen Modell gewonnen sein. Auch ist es möglich, aus der Position des Manipulatorarms mittels eines mathematischen Algorithmus auf die Lage des Gesamtschwerpunktes zu schließen. Insbesondere kann hierbei auch das durch die Aufnahme von Werkzeug, von Fremdobjekten oder von Waffen veränderte Gewicht des Manipulatorarms Einfluss finden, woraus sich gegebenenfalls eine veränderte Lage des jeweils einer Position zugeordneten Gesamtschwerpunkts ergeben kann.

Die Steuereinheit ist dafür eingerichtet, ausgehend von den Lagesignalen eine vertikale Projektion des Systemschwerpunkts in eine abgespeicherte oder aktuell vorgegebene Auflagefläche zu ermitteln, und abhängig von der ermittelten Projektion den Systemschwerpunkt durch Bewegung des Manipulatorarms kippvermeidend zu verändern. Unter der vertikalen Projektion des Systemschwerpunkts wird hierbei der Schnittpunkt einer von dem Systemschwerpunkt ausgehenden vertikalen Geraden mit der Auflagefläche verstanden. Die vorgegebene Auflagefläche kann beispielsweise die durch die Räder oder Laufräder in der Regel definierte Grundfläche des Landroboters sein. Alternativ kann die Geometrie der Antriebsplattform als Auflagefläche definiert werden. Gerät der Landroboter in eine Schräglage, so wandert die vertikale Projektion des gegebenen Systemschwerpunkts bezüglich der Auflagefläche. Gerät die Projektion des Systemschwerpunkts in eine Position außerhalb der vorgegebenen Auflagefläche, so kann hieraus auf eine kippgefährliche Situation des Landroboters geschlossen werden. In diesem Fall ist der Manipulatorarm durch die Steuereinheit derart anzusteuern, dass der projizierte Gesamtschwerpunkt wieder innerhalb der vorgegebenen Auflagefläche zum Liegen kommt.

Um nicht eine ständige, Energie verzehrende Bewegung des Manipulatorarms während der Fortbewegung des Landroboters durchzuführen, ist die Steuereinheit dafür eingerichtet, den Manipulatorarm erst dann zu bewegen, wenn die Projektion des Systemschwerpunkts außerhalb eines vorgegebenen oder einstellbaren Toleranzbereiches bezüglich der Auflagefläche liegt. Der Toleranzbereich kann dabei aufgrund der mechanischen Konstruktion bzw. der Gewichtsverteilung des Landroboters vorgegeben werden oder aus Modelldaten oder aus am echten Landroboter vorgenommenen Messungen abgeleitet sein. Dabei ist der Toleranzbereich derart vorzugeben, dass dann, wenn die Projektion des Systemschwerpunkts innerhalb des Toleranzbereiches liegt, mit einer hohen Wahrscheinlichkeit der Landroboter insgesamt kippstabil positioniert ist.

Zweckdienlicherweise ist die Steuereinheit dafür eingerichtet, den Systemschwerpunkt durch Bewegung des Manipulatorarms derart zu verändern, dass der Abstand der Projektion des Systemschwerpunkts zu den Rändern der Auflagefläche jeweils maximal ist.

Bei Erreichen dieses Punktes befindet sich der Landroboter insgesamt in seiner gegen Verkippung gesicherten stabilsten Position. Insofern empfiehlt es sich, den Systemschwerpunkt auf diese Position hin durch entsprechende Bewegung des Manipulatorarms zu verändern. Allerdings wird dies nicht ständig erforderlich sein, da teilweise kleine Bewegungen des Manipulatorarms bereits zu einer entsprechenden Stabilisierung genügen..

Neben der Betrachtung des Systemschwerpunkts ist es weiter vorteilhaft, Trägheitsmomente oder Drehmomente des Landroboters und insbesondere seines Manipulatorarms zu beobachten. Denn eine entsprechende Bewegung des Manipulatorarms kann aus Gründen der Drehimpulserhaltung zu einem unerwünschten Gesamtimpuls führen, der zu einem Verkippen des Landroboters aus einer an sich tolerierbaren Schräglage führt. Umgekehrt kann ein aus einer Bewegung des Manipulatorarms resultierendes Drehmoment oder Trägheitsmoment auch zu einer raschen Stabilisierung eines kippgefährdeten Landroboters eingesetzt werden.

In einer weiter vorteilhaften Ausgestaltung ist die Steuereinheit dafür eingerichtet, die Lage des Systemschwerpunkts durch eine gesteuerte Bewegung des Manipulatorarms zu regeln. Durch die Regelung wird die Steuereinheit stets versucht sein, die Projektion des Systemschwerpunkts innerhalb der Auflagefläche zu hatten. Wiederum empfiehlt es sich dabei, die Regelung erst dann vorzunehmen, wenn die Projektion des Systemschwerpunkts außerhalb eines vorgegebenen Toleranzbereiches liegt.

Alternativ zu einem kostengünstigen Kippwinkelsensor kann als die Lage erfassender Sensor auch ein Kreiselsystem oder ein Inertialmesssystem eingesetzt sein. Auch ist eine entsprechende Kombination verschiedener Sensoren vorteilhaft. Insbesondere können zur Lageerfassung oder zur Erfassung weiterer Größen, wie Beschleunigungen oder Drehraten etc. weitere Sensoren eingesetzt sein. So ist insbesondere ein Geschwindigkeitssensor, ein Beschleunigungssensor, ein Drucksensor, ein Drehratensensor, ein Magnetfeldsensor, ein Gravitationssensor und/oder ein optisches Bilderkennungssystem vorteilhaft einzusetzen. Dabei hilft beispielsweise ein Gravitationssensor, die Lage des Landroboters bezüglich der Horizontalen festzulegen oder die vertikale Projektion des Systemschwerpunkts zu ermitteln. Auch ein Magnetfeldsensor kann zur Lageerfassung wertvoll sein, indem er die Lage des Landroboters bezüglich der Magnetfeldlinien der Erde erfasst.

Hinsichtlich der Drucksensoren ist es vorteilhaft, wenn diese zur Erfassung einer tatsächlichen Auflagefläche angeordnet bzw. ausgebildet sind. Beispielsweise kann die tatsächliche Auflagefläche des Landroboters mittels an den Rädern, Laufrädern oder der Kette angeordneten Drucksensoren ermittelt werden. Verringert sich beispielsweise die Auflagefläche dadurch, dass der Landroboter auf hervorstehenden Geländespitzen, wie beispielsweise Steinen oder Treppenabsätzen angelangt, so kann hierbei die reale Auflagefläche zur Steuerung des Systemschwerpunkts eingesetzt werden. Dies ist insofern vorteilhaft, da sich durch eine Verringerung der realen Auflagefläche eine erhöhte Kippneigung des Landroboters ergibt. Insbesondere kann zur Erfassung der realen Auflagefläche auch ein optisches Bilderkennungssystem eingesetzt werden, welches das Terrain nach unten abtastet bzw. die Auflagepunkte von Laufrädern oder Ketten erfasst.

Ein Ausführungsbeispiel der Erfindung wird anhand einer Zeichnung näher erläutert. Dabei zeigen:
- Fig. 1: schematisch einen Landroboter, der sich kippgefährlich entlang einer Treppe fortbewegt und

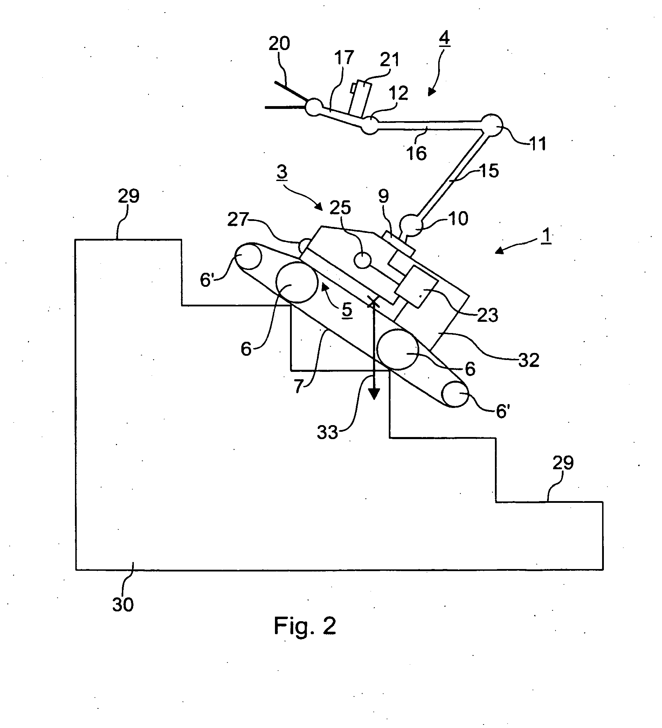

- Fig. 2: einen Landroboter in gleicher Situation wie in Fig. 1, wobei der Manipulatorarm kippstabilisierend verlagert ist.

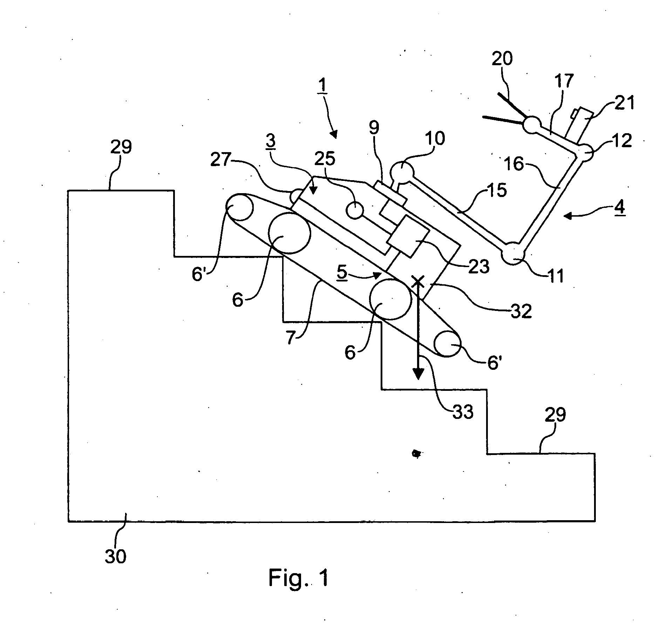

In Fig. 1 ist schematisch ein Landroboter 1 dargestellt, der eine Antriebsplattform 3 aufweist, auf welcher ein Manipulatorarm 4 bewegbar angeordnet ist.

Die Antriebsplattform 3 umfasst einen Antrieb 5, der aus einem nicht sichtbaren Antriebsaggregat, insbesondere einem Antriebsmotor, zwei großen Laufrädern 6 zwei kleineren Antriebsrädern 6' und einer umlaufenden Kette 7 gebildet ist. Der Antriebsmotor treib hierbei die kleinen Antriebsräder 6'und damit die Kette 7 an, so dass sich insgesamt ein Kettenantrieb ergibt.

Der Manipulatorarm 4 ist mittels eines Hauptdrehgelenks 9 an der Antriebsplattform 3 drehbar angeordnet. Dieses Hauptdrehgelenk 9 ermöglicht ein Verschwenken oder Verdrehen des Manipulatorarms 4 aus der Zeichenebene heraus mit einer Geschwindigkeit von über 90°/sec. Daneben umfasst der Manipulatorarm 4 weitere Drehgelenke 10,11 und 12 sowie entsprechende Armabschnitte 10,16 und 17. Am Ende des Armabschnitts 17 ist ein Greifer 20 angeordnet, mit dem sowohl Objekte ergriffen und transportiert als auch entsprechende Werkzeuge oder Waffen getragen bzw. entsprechend zum Einsatz gebracht werden können. Zusätzlich ist auf dem letzten Armabschnitt 17 eine Kamera 21 montiert, über welche einem entfernten Bediener Bilder von der Umgebung des Landroboters 1 übertragen werden.

Der dargestellte Landroboter 1 eignet sich sowohl zur Entschärfung von explosiven Gefahrobjekten als auch zur Aufklärung, Bergung und Überwachung. Auch kann der dargestellte Landroboter 1 als mobiler Roboter im Servicebereich, wie beispielsweise dem Transport von Gefahrgut etc. in urbanen und nonurbanen Umgebungen eingesetzt werden. Durch die Aufnahme entsprechender Waffen ist der Landroboter 1 auch in militärisch fremdem Terrain einsetzbar.

Zur Ansteuerung des Manipulatorarms 4, zum Empfang entsprechender Steuersignale eines Bedieners und zum Empfang und Auswertung von Sensorsignalen ist in der Antriebsplattform des Landroboters 1 weiter eine Steuereinheit 23 implementiert, die mit einem Lagesensor 25, mit einem Bilderkennungssystem 27 und mit dem Antrieb des Manipulatorarms 4 verbunden ist. Die Steuereinheit 23 arbeitet sowohl autonom, was die Auswertung der Sensordaten und Umsetzung in eine Gegenbewegung des Manipulatorarms 4 betrifft, als auch fremdgesteuert, was die Anweisungssignale eines entfernten Bedieners anbelangt. Der Lagesensor 25 umfasst einen dreidimensionalen Kippwinkelsensor sowie ein Kreiselsystem. Weiter ist dem Lagesensor 25 ein Gravitationssensor zugeordnet. Der Manipulatorarm 4 verfügt über Drehsensoren, die den jeweiligen Antriebswellen des die Drehgelenke 9,10,11 und 12 bewegenden Antriebe zugeordnet sind. Mittels der Daten der dem Manipulatorarm 4 zugeordneten Positionssensoren hat die Steuereinheit 23 zu jeder Zeit Kenntnis über die aktuelle Position bzw. Lage des Manipulatorarms 4. Das Bilderkennungssystem 27 besitzt eine abbildende Optik, mittels derer das Gesichtsfeld des Landroboters in einem weiten Raumwinkelbereich abgetastet wird.

In die Steuereinheit 23 ist ein Modell des Landroboters 1 implementiert, mittels dem jeder Position des Manipulatorarms 4 die Lage des Systemschwerpunkts, d.h. des Gesamtschwerpunkts des Landroboters 1, zugeordnet werden kann. Weiter ist in der Steuereinheit 23 eine Auflagefläche vorgegeben, die in diesem Fall durch den Abstand der Auflageflächen der großen Laufräder 6 voneinander definiert ist.

Bewegt sich der Landroboter 1, wie in Fig. 1 dargestellt, entlang einer Stufe 29, so gerät er in eine Schräglage, wobei sich zusätzlich die Auflagefläche des Kettenantriebs verringert. Der gesamte Landroboter 1 ruht ausschließlich auf den großen Laufrädern 6. Befindet sich zudem der Manipulatorarm 4 in der dargestellten Position gem. Fig. 1, so ergibt sich ein Gesamt- oder Systemschwerpunkt 32, dessen Projektion 33 außerhalb der realen Auflagefläche durch die Auflagefläche der großen Laufräder 6 auf den Stufenkanten gegeben ist. Insofern würde der Landroboter 1, sobald er versuchen würde, die Stufe 29 zu erklimmen, unerwünschterweise kippen.

In eine gemäß Fig. 1 dargestellte Kippsituation gelangt der Landroboter 1 jedoch nicht, wenn die Steuereinheit 23 dafür ausgebildet ist, ausgehend von der erfassten Lage des Landroboters 1 den Manipulatorarm 4 selbsttätig zu einer aktiven Kippvermeidung zu bewegen. Vorliegend wird die Steuereinheit 23 mittels des Lagesensors 25, sobald der Landroboter 1 die Stufe 29 zu erklimmen versucht, eine Verkippung aus der Horizontalen erfassen. Ausgehend von dieser Verkippung und von dem implementierten Modell erkennt die Steuereinheit 23 selbsttätig, dass der bei der gegebenen Position des Manipulatorarms 4 resultierende Systemschwerpunkt 32 derart zum Liegen kommt, dass seine Projektion außerhalb der Auflagefläche, die durch die Auflagepunkte der großen Laufräder 6 vorgegeben ist, liegt. Ausgehend von dieser Situation, die eintritt, sobald der Landroboter 1 sich entlang der Stufe 29 bewegt, leitet die Steuereinheit 23 unmittelbar eine rasche Gegenbewegung des Manipulatorarms 4 ein. Eine günstige Lage des Systemschwerpunkts 32 wird insbesondere dann erzielt, wenn die vertikale Projektion 33 des System- oder Gesamtschwerpunkts 32 innerhalb der vorgegebenen Auflagefläche zum Liegen kommt. Eine solche Position ist dann gegeben, wenn der Manipulatorarm 4 insgesamt nach vorne in Laufrichtung verschwenkt wird. Entsprechend wird die Steuereinheit 23, sobald der Landroboter 1 beginnt, die Stufe 29 zu erklimmen, den Manipulatorarm 4 in die vorwärts gerichtete Position zu verfahren. Da der mittels dieser Position erzielte Gesamtschwerpunkt 32 nunmehr innerhalb eines vorgegebenen Toleranzbereiches innerhalb der vorgegebenen Auflagefläche zum Liegen kommt, findet bei einer weiteren stetigen Aufwärtsbewegung des Landroboters 1 mit gleichbleibender Steigung entlang der Stufe 29 keine weitere stabilisierende Bewegung des Manipulatorarms 4 mehr statt. Der Landroboter 1 erklimmt problemlos die Stufe 29.

Somit ist ein vorausschauendes Beurteilen der voraussichtlichen Fahrstrecke und eine Entscheidung über eine Positionsbewegung des Manipulatorarms 4 durch einen Bediener nicht mehr erforderlich. Sobald der Landroboter 1 in eine entsprechende Schräglage gerät, bei welcher der Systemschwerpunkt 32 außerhalb des Toleranzbereiches der vorgegebenen Auflagefläche liegt, wird eine entsprechende Gegenbewegung des Manipulatorarms 4 durch die Steuereinheit 23 eingeleitet. Das Kippen wird aktiv aus einer aktuellen Situation des Landroboters 1 während seines Fortbewegens durch eine entsprechende Bewegung des Manipulatorarms 4 verhindert.

Unter den beiden in dieser Anmeldung verwendeten Ausdrücken "Verkippen" bzw. "Kippen" ist grundsätzlich jegliche Änderung der Lage und/oder Orientierung von Bestandteilen des erfindungsgemäßen Landroboters in einem Schwerkraftfeld in Bezug auf seinen Gesamtschwerpunkt zu verstehen. Insbesondere kann es sich beim diesem "Verkippen" bzw. "Kippen" um unvorhergesehene bzw. ungewollte Lage-/Orientierungsänderungen handeln. Die Erfindung ist jedoch nicht darauf beschränkt, sondern ist auch auf Situationen anwendbar, in denen diese Änderung vorhersehbar, also einplanbar ist. Dies ist zum Beispiel dann der Fall, wenn der Landroboter auf einer horizontalen Fläche auf den Ansatz einer Steigung zufährt und diese Situation bereits vor Erreichen dieses Ansatzes erfasst wird und von einer Steuerung des Landroboters berücksichtigt wird.

Insbesondere umfassen die Begriffe "Verkippen" bzw. "Kippen" auch den Vorgang des Umkippens. Ein Körper kippt dann um, wenn die Lotlinie seines Gesamtschwerpunkts nicht durch seine Standfläche verläuft, die durch seine Kippkanten bzw. Kipplinien begrenzt ist. Dementsprechend ist unter "Vermeidung einer Verkippung" bzw. "Kippvermeidung" insbesondere die Absicht zu verstehen, ein Umkippen des Landroboters zu vermeiden.

Die vorliegende Erfindung ist jedoch nicht darauf beschränkt, lediglich ein Umkippen zu vermeiden. Vielmehr umfassen die Formulierungen "Vermeidung einer Verkippung" bzw. "Kippvermeidung" auch schon die Absicht, eine Annäherung des Durchstoßpunktes der Lotlinie des Gesamtschwerpunktes durch die momentane Standfläche des Landroboters an eine der Kippkanten zu verhindern. Dadurch wird nämlich nicht nur ein Umkippen des Landroboters vermieden, was sozusagen die Minimalanforderung an das erfindungsgemäße System darstellt, sondern darüber hinaus eine jederzeitige, möglichst stabile Lage des Landroboters erreicht. Im Idealfall ist diese "Vermeidung einer Verkippung" bzw. "Kippvermeidung" so ausgestattet, dass der Durchstoßpunkt der Lotlinie des Gesamtschwerpunktes durch die momentane Standfläche des Landroboters zu jedem Zeitpunkt mit dem geometrischen Schwerpunkt der Standfläche zusammenfällt, bzw. möglichst nah bei diesem liegt.

### Bezugszeichenliste

- 1: Landroboter
- 3: Antriebsplattform
- 4: Manipulatorarm
- 5: Antrieb
- 6: Laufräder, groß
- 6': Antriebsräder, klein
- 7: Kette
- 9: Hauptdrehgelenk
- 10: Drehgelenk
- 11: Drehgelenk
- 12: Drehgelenk
- 15: Armabschnitt
- 16: Armabschnitt
- 17: Armabschnitt
- 20: Greifer
- 21: Kamera
- 23: Steuereinheit
- 25: Lagesensor
- 27: Bilderkennungssystem
- 29: Stufe
- 30: Treppe
- 32: Schwerpunkt
- 33: Projektion

## Patentansprüche

1. Steuerbarer Landroboter (1) mit einer Antriebsptattform (3) zur Fortbewegung, mit einem auf der Antriebsplattform (3) angeordneten bewegbaren Manipulatorarm (4), mit wenigstens einem Sensor (25) zur Lageerfassung und mit einer mit dem Sensor (25) in Kontakt stehenden Steuereinheit (23) zur Ansteuerung des Manipulatorarms (4),
**dadurch gekennzeichnet,**
**dass** die Steuereinheit (23) dafür eingerichtet ist, ausgehend von erfassten Lagesignalen des Sensors (25) bei Erfassung einer eintretenden Schräglage des Landroboters (1) den Manipulatorarm (4) selbsttätig zu einer aktiven Umkippvermeidung zu bewegen,
wobei der Manipulatorarm (4) mit Positionssensoren zur Erfassung der jeweils aktuellen Position ausgestattet ist, und wobei die Steuereinheit (23) dafür eingerichtet ist, ausgehend von den Positionssignalen des Manipulatorarms (4) modellbasiert die Lage des Systemschwerpunkts (32) zu ermitteln,
wobei die Steuereinheit (23) dafür eingerichtet ist, ausgehend von den Lagesignalen eine vertikale Projektion (33) des Systemschwerpunkts (32) in eine abgespeicherte oder aktuell vorgegebene Auflagefläche zu ermitteln, und abhängig von der ermittelten Projektion (33) den Systemschwerpunkt (32) durch Bewegung des Manipulatorarms (4) umkippvermeidend zu verändern,
wobei die Steuereinheit (23) dafür eingerichtet ist, den Manipulatorarm (4) erst dann zu bewegen, wenn die Projektion (33) des Systemschwerpunkts (32) außerhalb eines vorgegebenen oder einstellbaren Toleranzbereiches bezüglich der Auflagefläche liegt.

2. Steuerbarer Landroboter (1) nach Anspruch 1,
wobei die Steuereinheit (23) dafür eingerichtet ist, die Lagesignale mit einer Frequenz von mindestens 10 s⁻¹ abzutasten.

3. Steuerbarer Landroboter (1) nach Anspruch 1 oder 2,
wobei die Steuereinheit (23) dafür eingerichtet ist, die Bewegung des Manipulatorarmes (4) nach Erfassung der Lagesignale mit einer Reaktionszeit von weniger als 10 ms einzuleiten.

4. Steuerbarer Landroboter (1) nach einem der vorhergehenden Ansprüche,
wobei der Manipulatorarm (4) wenigstens ein Drehgelenk (9, 10, 11, 12) mit einem Antrieb derart aufweist, dass Drehbewegungen mit einer Winkelgeschwindigkeit von mehr als 50° pro Sekunde, vorzugsweise von mehr als 90° pro Sekunde, ermöglicht sind.

5. Steuerbarer Landroboter (1) nach einem der vorhergehenden Ansprüche,
wobei die Steuereinheit (23) dafür eingerichtet ist, den Systemschwerpunkt (32) durch Bewegung des Manipulatorarms (4) derart zu verändern, dass der Abstand der Projektion (33) zu den Rändern der Auflagefläche jeweils maximal ist.

6. Steuerbarer Landroboter (1) nach einem der vorhergehenden Ansprüche,
wobei die Steuereinheit (23) dafür eingerichtet ist, die Lage des Systemschwerpunkts (32) durch die gesteuerte Bewegung des Manipulatorarms (4) zu regeln.

7. Steuerbarer Landroboter (1) nach einem der vorhergehenden Ansprüche,
wobei als Sensor (25) ein Kippwinkelsensor, ein Kreiselsystem oder ein Inertialmesssystem eingesetzt ist.

8. Steuerbarer Landroboter (1) nach einem der vorhergehenden Ansprüche,
wobei zusätzlich zu dem die Lage erfassenden Sensor (25) oder diesen verwirklichend eine Anzahl weiterer Sensoren eingesetzt ist, insbesondere ein Geschwindigkeitssensor, ein Beschleunigungssensor, ein Drucksensor, ein Drehratensensor, ein Magnetfeldsensor, ein Gravitationssensor und/oder ein optisches Bilderkennungssystem (27).

9. Steuerbarer Landroboter (1) nach einem der vorhergehenden Ansprüche,
wobei als Positionssensoren des Manipulatorarms (4) Dreh- und/oder Translationssensoren eingesetzt sind, so dass die aktuelle Stellung des Arms abrufbar ist.

10. Steuerbarer Landroboter (1) nach einem der vorhergehenden Ansprüche,
wobei eine Anzahl von Drucksensoren oder das optische Bilderkennungssystem (27) zur Erfassung einer tatsächlichen Auflagefläche angeordnet bzw. ausgebildet ist, und die tatsächliche Auflagefläche als aktuelle Auflagefläche vorgegeben wird.

## Claims

1. Controllable land robot (1) having a drive platform (3) for movement, having a moveable manipulator arm (4) which is arranged on the drive platform (3), having at least one sensor (25) for position detection, and having a control unit (23), which makes contact with the sensor (25), for operation of the manipulator arm (4), **characterized**
**in that** the control unit (23) is designed to use detected position signals from the sensor (25) to move the manipulator arm (4) automatically to active tipping avoidance on detection that the land robot (1) is in an inclined position,
wherein the manipulator arm (4) is equipped with position sensors for detection of the respective current position, and wherein the control unit (23) is designed to use the position signals from the manipulator arm (4) to determine the position of the system's centre of gravity (32), on a modelling basis,
wherein the control unit (23) is designed to use the position signals to determine a vertical position (33) of the system's centre of gravity (32) into a stored or currently predetermined contact surface, and to move the manipulator arm (4) as a function of the determined projection (33) to change the system's centre of gravity (32) in order to avoid tipping,
wherein the control unit (23) is designed to move the manipulator arm (4) only when the projection (33) of the system's centre of gravity (32) is outside a predetermined or adjustable tolerance band with respect to the contact surface.

2. Controllable land robot (1) according to Claim 1,
wherein the control unit (23) is designed to sample the position signals at a frequency of at least 10 s⁻¹.

3. Controllable land robot (1) according to Claim 1 or 2,
wherein the control unit (23) is designed to initiate the movement of the manipulator arm (4) after detection of the position signals, with a reaction time of less than 10 ms.

4. Controllable land robot (1) according to one of the preceding claims,
wherein the manipulator arm (4) has at least one rotating joint (9, 10, 11, 12) with a drive, such that rotary movements are possible at an angular velocity of more than 50° per second, preferably of more than 90° per second.

5. Controllable land robot (1) according to one of the preceding claims,
wherein the control unit (23) is designed to change the system's centre of gravity (32) by moving the manipulator arm (4) such that the distance of the projection (33) to the edges of the contact surface is in each case a maximum.

6. Controllable land robot (1) according to one of the preceding claims,
wherein the control unit (23) is designed to control the position of the system's centre of gravity (32) by a controlled movement of the manipulator arm (4).

7. Controllable land robot (1) according to one of the preceding claims,
wherein a tilt angle sensor, a gyroscope system or an inertial measurement system is used as the sensor (25).

8. Controllable land robot (1) according to one of the preceding claims,
wherein a number of further sensors are used in addition to the sensor (25) which detects the position, or implements this function, in particular a speed sensor, an acceleration sensor, a pressure sensor, a rotation rate sensor, a magnetic field sensor, a gravitation sensor and/or an optical image recognition system (27).

9. Controllable land robot (1) according to one of the preceding claims,
wherein rotation and/or translation sensors are used as position sensors for the manipulator arm (4), such that the current position of the arm can be called up.

10. Controllable land robot (1) according to one of the preceding claims,
wherein a number of pressure sensors or the optical image recognition system (27) are or is arranged and/or designed to detect an actual contact surface, and the actual contact surface is predetermined to be the current contact surface.

## Revendications

1. Robot terrestre commandable (1), comprenant une plate-forme d'entraînement (3) pour le déplacement, comprenant un bras manipulateur (4) disposé de manière mobile sur la plate-forme d'entraînement (3), comprenant au moins un capteur (25) de détection de la position et comprenant une unité de commande (23) en contact avec le capteur (25) pour commander le bras manipulateur (4),
**caractérisé en ce que**
l'unité de commande (23) est conçue pour déplacer automatiquement le bras manipulateur (4) en vue d'éviter un renversement en cas de détection d'une position inclinée adoptée par le robot terrestre (1), en se basant sur des signaux de position détectés par le capteur (25),
le bras manipulateur (4) étant équipé de capteurs de position pour détecter la position actuelle correspondante et l'unité de commande (23) étant conçue pour déterminer la position du centre de gravité du système (32) en se basant sur un modèle à partir des signaux de position du bras manipulateur (4),
l'unité de commande (23) étant conçue pour déterminer une projection verticale (33) du centre de gravité du système (32) dans une surface d'appui mémorisée ou actuelle prédéfinie en se basant sur les signaux de position et pour modifier le centre de gravité du système (32) en déplaçant le bras manipulateur (4) en vue d'éviter un renversement en fonction de la projection (33) déterminée,
l'unité de commande (23) étant conçue pour ne déplacer le bras manipulateur (4) que lorsque la projection (33) du centre de gravité du système (32) se trouve en dehors d'une plage de tolérance prédéfinie ou réglable par rapport à la surface d'appui.

2. Robot terrestre commandable (1) selon la revendication 1, l'unité de commande (23) étant conçue pour échantillonner les signaux de position à une fréquence minimale de 10 s⁻¹.

3. Robot terrestre commandable (1) selon la revendication 1 ou 2, l'unité de commande (23) étant conçue pour initier le mouvement du bras manipulateur (4) après la détection des signaux de position avec un temps de réaction inférieur à 10 ms.

4. Robot terrestre commandable (1) selon l'une des revendications précédentes, le bras manipulateur (4) présentant au moins une articulation tournante (9, 10, 11, 12) avec un mécanisme d'entraînement de telle sorte que des mouvements de rotation à une vitesse angulaire supérieure à 50° par seconde, de préférence supérieure à 90° par seconde, soient possibles.

5. Robot terrestre commandable (1) selon l'une des revendications précédentes, l'unité de commande (23) étant conçue pour modifier le centre de gravité du système (32) en déplaçant le bras manipulateur (4) de telle sorte que l'écart entre la projection (33) et les bords de la surface d'appui soit à chaque fois maximum.

6. Robot terrestre commandable (1) selon l'une des revendications précédentes, l'unité de commande (23) étant conçue pour réguler la position du centre de gravité du système (32) par le mouvement contrôlé du bras manipulateur (4).

7. Robot terrestre commandable (1) selon l'une des revendications précédentes, le capteur (25) utilisé étant un capteur d'angle de basculement, un système gyroscopique ou un système de mesure inertiel.

8. Robot terrestre commandable (1) selon l'une des revendications précédentes, une pluralité d'autres capteurs étant utilisée en plus du capteur (25) de détection de la position ou de matérialisation de celle-ci, notamment un capteur de vitesse, un capteur d'accélération, un capteur de pression, un capteur de vitesse de rotation, un capteur de champ magnétique, un capteur de gravitation et/ou un système optique de reconnaissance d'image (27).

9. Robot terrestre commandable (1) selon l'une des revendications précédentes, les capteurs de position utilisés pour le bras manipulateur (4) étant des capteurs de rotation et/ou de translation, de sorte qu'il soit possible d'interroger la position actuelle du bras.

10. Robot terrestre commandable (1) selon l'une des revendications précédentes, une pluralité de capteurs de pression ou le système optique de reconnaissance d'image (27) étant disposés ou configurés pour détecter une surface d'appui réelle et la surface d'appui réelle étant prédéfinie comme surface d'appui actuelle.
